(19)

**Europäisches Patentamt**
**European Patent Office**
**Office européen des brevets**

(11) **EP 2 388 461 A1**

(12) **EUROPEAN PATENT APPLICATION**

(43) Date of publication:
**23.11.2011 Bulletin 2011/47**

(51) Int Cl.:
*F02D 41/00* (2006.01)     *F02D 13/02* (2006.01)

(21) Application number: **10425171.5**

(22) Date of filing: **21.05.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **C.R.F. Società Consortile per Azioni 10043 Orbassano (Torino) (IT)**

(72) Inventors:
• **Tonetti, Marco 10043 Orbassano (IT)**
• **Ruggiero, Andrea 10043 Orbassano (IT)**
• **Palmisano, Annachiara 10043 Orbassano (IT)**

(74) Representative: **Bergadano, Mirko et al Studio Torta S.r.l. Via Viotti, 9 10121 Torino (IT)**

(54) **Internal exhaust gas recirculation control in an internal combustion engine**

(57)     An automotive electronic control unit (14) for an internal combustion engine (1) comprising at least one cylinder (2) provided with at least one intake valve (3) and at least one exhaust valve (6), and a variable intake and/or exhaust valve actuation system (9). The electronic control unit (14) is programmed to control the variable valve actuation system (9) so as to obtain an internal exhaust gas recirculation through the intake and exhaust valves (3, 6) and to control the internal exhaust gas recirculation based on a mathematical model that models the fluid-dynamic behaviour of an intake or exhaust valve (3, 6) as if this was a nozzle (11).

$$m_{iEGR} = \int_{\varphi_1}^{\varphi_2} A_{is}(\varphi) \cdot \frac{p_{UP}(\varphi)}{\sqrt{RT_{Cyl}}} \cdot \sqrt{\frac{2k}{k-1}\left[\left(\frac{p_{DOWN}}{p_{UP}(\varphi)}\right)^{\frac{2}{k}} - \left(\frac{p_{DOWN}}{p_{UP}(\varphi)}\right)^{\frac{k+1}{k}}\right]} d\varphi$$

EP 2 388 461 A1

**Description**

## TECHNICAL FIELD OF THE INVENTION

The present invention relates to internal exhaust gas recirculation (iEGR) control in an internal combustion engine of a motor vehicle, in particular a diesel engine provided with a common rail fuel injection system and a variable intake and/or exhaust valve actuation (VVA) system.

## STATE OF THE ART

In automotive internal combustion engines it is known to reduce nitrogen oxide (NOx) emissions by recirculating part of the exhaust gases in the engine cylinders, so that they takes part in fuel combustion. Exhaust gas recirculation can be obtained both outside and inside the internal combustion engine.

EP 1,589,213, in the name of the Applicant, discloses an external exhaust gas recirculation, wherein exhaust gases to be recirculated are re-introduced into the intake manifold through a exhaust gas recirculation duct, along which an external exhaust gas recirculation valve, aka EGR valve, is arranged, which is controlled by an electronic control unit (ECU) via a pulse width modulation (PWM) control signal. External exhaust gas recirculation may be either of the so-called high pressure (HP) type, wherein the exhaust gases are taken downstream of the exhaust manifold, or else of the low pressure (LP) type, wherein the exhaust gases are taken downstream of the turbine of the turbosupercharger (where provided) and of the exhaust gas post treatment devices (catalytic converter and particulate filter).

EP 1,589,213, as well as EP 1,273,770 and EP 2,093,403, all in the name of the Applicant, propose an internal exhaust gas recirculation through the engine intake and exhaust valves. In this solution, intake and exhaust valves of a cylinder are kept open simultaneously during the normal exhaust phase of the cylinder, thus causing part of the exhaust gases to flow also into the intake duct, as well as into the exhaust duct, in such a way that it can be re-introduced into the cylinder in the next intake phase. Alternatively, the intake and exhaust valves of a cylinder are kept open simultaneously during the normal intake phase of the cylinder, thus causing part of the exhaust gases that flow in the exhaust duct to be drawn back into the cylinder on account of the negative pressure in the cylinder itself.

In the solution disclosed in the aforementioned patents, the exhaust gases are recirculated internally through the intake and exhaust valves by exploiting the potential of a variable intake and/or exhaust valve actuation (VVA) system, which enables opening and closing timing of the engine intake and/or exhaust valves to be varied, as desired, according to any desired timing law. In greater detail, intake and/or exhaust valves are driven by the respective cams of the engine camshaft via interposition of a chamber which contains a pressurized fluid and which can be emptied by means of a solenoid valve controlled by an electronic control unit. When the chamber containing the pressurized fluid is emptied, the associated engine valve rapidly returns into its closing position, also in the case where the associated cam would tend to keep it open.

By appropriately modulating the lift of the intake valves or alternatively of the exhaust valves, depending on whether the internal exhaust gas recirculation is obtained by keeping the intake and exhaust valves simultaneously open during the exhaust phases or, respectively, during the intake phases, it is possible to vary the amount of exhaust gases internally recirculated during actuation of the intake and exhaust valves.

## OBJECT AND SUMMARY OF THE INVENTION

The Applicant has experimentally experienced that the amount of exhaust gases that can be internally recirculated via the variable valve actuation system described in the aforementioned patents is not very high and hence may not be sufficient to achieve a substantial abatement of the nitrogen oxide (NOx) emissions, and, moreover, the temperatures of the internally recirculated exhaust gases are rather high and hence such as to possibly give rise to production of a significant amount of particulate as a consequence of the reduction of the engine volumetric efficiency.

Consequently, the Applicant has experimentally experienced that in order to contain the pollutant emissions within the limits established by recent and future relevant standards, it is necessary to combine the internal exhaust gas recirculation with an external exhaust gas recirculation, conveniently of the low pressure type.

However, the engine control strategies currently implemented by automotive electronic control units are such as to control only the amount of externally recirculated exhaust gases, by acting appropriately on the EGR valve. In addition, said engine control strategies are based upon the intake air flow rate measured via an air flowmeter, aka debimeter, arranged at the intake manifold inlet, which, as is known, enables only the total amount of exhaust gases to be globally recirculated to be estimated.

The aim of the present invention is hence to provide a solution that enables internal exhaust gas recirculation through the intake and exhaust valves to be controlled in a precise and reliable way.

This aim is achieved by the present invention in so far as it relates to an automotive electronic control unit, to a software implementable by the automotive electronic control unit, to an internal combustion engine, and to a motor vehicle, as defined in the appended claims.

## BRIEF DESCRIPTION OF THE DRAWINGS

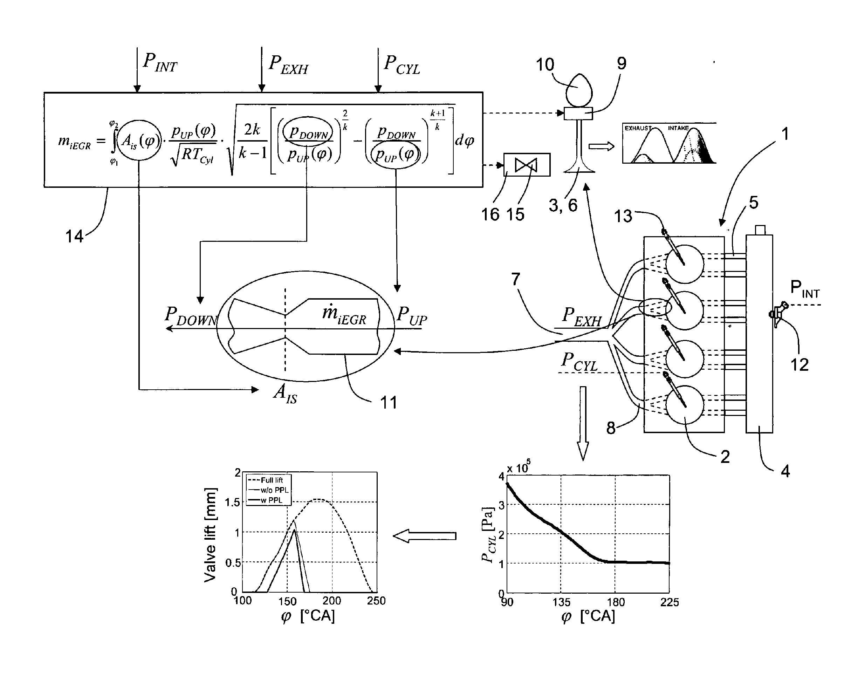

The attached drawing shows in a schematic way an automotive internal combustion engine provided with a variable intake and/or exhaust valve actuation system according to the present invention.

## DETAILED DESCRIPTION OF PREFERRED EMBODIMENTS OF THE INVENTION

The present invention will now be described in detail with reference to the attached drawing to enable a person skilled in the art to reproduce it and use it. Various modifications to the embodiments described will be immediately evident to persons skilled in the branch, and the generic principles described can be applied to other embodiments and applications without thereby departing from the scope of the present invention, as defined in the appended claims. Consequently, the present invention is not to be considered as limited to the embodiments described and shown herein, but it must be granted the widest scope of protection consistently with the principles and characteristics described and claimed herein.

The present invention stems from a study conducted by the Applicant and aimed at identifying a mathematical model that could enable the amount of exhaust gases internally recirculated through the intake and/or exhaust valves to be precisely and reliably estimated and that could be implemented with the (limited) processing resources of an automotive electronic control unit, so as to be enable both internal and external exhaust gas recirculation to be precisely, reliably and independently controlled.

This study has initially led to the definition of a first mathematical model based on experimental data and constituted by a characteristic curve representing the amount of exhaust gases internally recirculated during actuation of an intake or an exhaust valve as a function of the lift thereof and obtained as an average of a plurality of characteristic curves, each associated to a corresponding engine operating point, defined by engine speed and load, and to a corresponding pressure of the gaseous mixture that flows through the intake or exhaust valve.

This mathematical model has, however, proven far from precise at the full lift of the intake and exhaust valves, and this low precision has been found to be due to the fact that the average characteristic curve did not take into account the dependence of the fluid-dynamic behaviour of the intake and exhaust valves upon physical parameters such as the in-cylinder pressure, the pressure in the intake and exhaust manifolds, the effective lift of the intake and exhaust valves, etc.

This has hence led the Applicant to explore other solutions aimed at enabling the amount of internally recirculated exhaust gases to be more precisely and reliably estimated.

Among the various solutions studied and tested by the Applicant, the one that yields the most precise and reliable estimation of the amount of internally recirculated exhaust gases has proven to be the one based upon modelling of the fluid-dynamic behaviour of the engine intake and exhaust valves as if each of these was a nozzle, and hence based upon the estimation of the amount of the exhaust gases internally recirculated during actuation of an intake or exhaust valve based on this mathematical model.

The attached figure shows a diagram which depicts an internal combustion engine 1, in particular a diesel engine, comprising a plurality of cylinders 2, each provided with one or more intake valves 3, in the example illustrated two, fluidically connected to an air intake manifold 4 through respective air intake ducts 5, and with one or more exhaust valves 6, in the example illustrated two, fluidically connected to an exhaust manifold 7 through respective exhaust ducts 8.

The attached figure schematically depicts a variable intake and exhaust valve actuation system 9, the cams 10 that drives the intake and exhaust valves 3, 6, and a nozzle 11 that models the fluid-dynamic behaviour of each of the intake and exhaust valves 3, 6.

The attached figure also schematically depicts an electronic engine control system, of which only the parts involved in implementation of the present invention are shown, and which comprises: a pressure sensor 12 associated to the air intake manifold 4 to measure the pressure of the gaseous mixture taken in by the engine 1; pressure sensors 13 associated to the engine cylinders 2 to measure the pressure of the gaseous mixture therein; and an electronic control unit 14 connected to the pressure sensors 12 and 13 and appropriately programmed to control internal exhaust gas recirculation based on a mathematical model that models the fluid-dynamic behaviour of the intake valves 3 and of the exhaust valves 6 as if each of these was a nozzle.

In particular, the electronic control unit 14 is programmed to store and process the mathematical model of the fluid-dynamic behaviour of an intake or exhaust valve 3, 6 constituted by the following Equation (1) of the nozzle 11:

$$m_{iEGR} = \int_{\varphi_1}^{\varphi_2} A_{is}(\varphi) \cdot \frac{p_{UP}(\varphi)}{\sqrt{RT_{Cyl}}} \cdot \sqrt{\frac{2k}{k-1} \left[ \left( \frac{p_{DOWN}(\varphi)}{p_{UP}(\varphi)} \right)^{\frac{2}{k}} - \left( \frac{p_{DOWN}(\varphi)}{p_{UP}(\varphi)} \right)^{\frac{k+1}{k}} \right]} \, d\varphi \qquad (1)$$

where:

- $\varphi$ is the engine crankshaft angle;
- $\varphi_1$ and $\varphi_2$ are the engine crankshaft angles in which the modelled intake or exhaust valve 3, 6 is kept open;
- $m_{iEGR}$ is the amount (in mass) of exhaust gases that flow through the nozzle 11 and that are hence recirculated during actuation of the modelled intake valve 3 or exhaust valve 6;
- $A_{IS}(\varphi)$ is the iso-entropic section of the nozzle 11, which will be described in greater detail in what follows;
- $P_{UP}(\varphi)$ and $P_{DOWN}(\varphi)$ are the exhaust gas pressures respectively upstream from and downstream of the nozzle 11 in the exhaust gas flow direction;
- $T_{cyl}$ is the temperature of the gaseous mixture within the engine cylinders 2;
- **k** is the polytropic exponent; and
- **R** is the universal gas constant.

Equation (1), as well as some of the physical quantities that appear therein, are depicted also in the attached figure for completeness of illustration.

When Equation (1) is used to model an intake valve 3, as shown in the example depicted in the attached figure, exhaust gas pressures $\boldsymbol{P}_{UP}$ and $\boldsymbol{P}_{DOWN}$ upstream from and downstream of the nozzle 11 correspond, respectively, to the in-cylinder pressure $\boldsymbol{P}_{CYL}$ in the cylinder 2 associated with the modelled intake valve 3, and to the pressure $\boldsymbol{P}_{INT}$ in the intake manifold 4.

When instead Equation (1) is used to model an exhaust valve 6, exhaust gas pressures $\boldsymbol{P}_{UP}$ and $\boldsymbol{P}_{DOWN}$ upstream from and downstream of the nozzle 11 correspond, respectively, to the pressure $\boldsymbol{P}_{EXH}$ in the exhaust manifold 7 and to the in-cylinder pressure $\boldsymbol{P}_{CYL}$ in the cylinder 2 associated with the modelled exhaust valve 6. The pressure $\boldsymbol{P}_{EXH}$ in the exhaust manifold 7 can be alternatively measured directly via a purposely provided pressure sensor (not illustrated) associated with the exhaust manifold 7 or else computed indirectly based on the exhaust gas pressure upstream from the exhaust gas posttreatment devices (not illustrated) arranged downstream of the exhaust manifold 7.

As regards the iso-entropic section $\boldsymbol{A}_{IS}$ of the nozzle 11, it is a quantity that depends upon the outflow coefficient of the modelled intake or exhaust valve 3, 6, which in turn depends upon the lift of the modelled intake or exhaust valve 3, 6, according to the following equation:

$$A_{IS}(\varphi) = A_R \cdot C_E(h(\varphi)) \qquad (2)$$

where:

- $\boldsymbol{A}_R$ is the area of a reference section of the nozzle 11;
- $\boldsymbol{h}(\varphi)$ is the lift of the modelled intake or exhaust valve 3, 6, which is a function of the engine crankshaft angle; and
- $\boldsymbol{C_E}(\boldsymbol{h}(\varphi))$ is the outflow coefficient of the modelled intake or exhaust valve 3, 6, which is in turn a function of the lift of the modelled intake or exhaust valve 3, 6.

When Equation (1) is used to model an intake valve 3, as shown in the example depicted in the attached figure, the electronic control unit 14 is further programmed to compute the lift $\boldsymbol{h}(\varphi)$ of the intake valve 3 as a function of the engine crankshaft angle $\varphi$ also taking into account the in-cylinder pressure $\boldsymbol{P}_{CYL}$ in the cylinder 2 associated with the intake valve 3, which pressure, by opposing opening of the intake valve 3, causes a delay in opening of the intake valve 3 of a few degrees of engine crankshaft angle $\varphi$ (approximately 8-12°CA) (so-called "pumping loop effect") with respect to the lift that the intake valve 3 would have if it was driven directly by the corresponding cam 10 without the interposition of the chamber containing a pressurized fluid of the variable valve actuation system 9. In particular, the plot of the lift of the intake valve 3 as a function of the engine crankshaft angle φ is stored in the electronic control unit 14 in the form of a table and is shown schematically also in the attached figure, together with the plot of the in-cylinder pressure $P_{CYL}$ in the cylinder 2 associated with the intake valve 3, as a function of the engine crankshaft angle φ.

The mathematical model of the intake and exhaust valves 3, 6 represented by Equation (1) appearing above has proven particularly precise and reliable, providing values of the amount $m_{iEGR}$ of internally recirculated exhaust gases that have an excellent correlation with the experimental data. In quantitative terms, the deviation between the amount $m_{iEGR}$ of exhaust gases internally recirculated during actuation of an intake valve 3 estimated with Equation (1) and the one estimated with a mathematical model much more accurate and not implementable by an automotive electronic control unit but only by a computer has proven to be little more than 1% (74 mg as against 73 mg @ 1500x2 [RPM x MEP] and full lift, and 64 mg as against 62 mg @ 2000x5 [RPM x MEP] and medium lift).

Electronic control unit 14 is further programmed to control internal and external exhaust gas recirculation based on Equation (1) so as to achieve given targets in terms of total amount of exhaust gases globally recirculated.

In particular, electronic control unit 14 is programmed to firstly compute an amount $m_{iEGR}$ of exhaust gases to be internally recirculated based on criteria that are established by the automotive manufacturer to achieve given targets, for example in terms of nitrogen oxide (NOx) and particulate emissions. By way of example, the amount $m_{iEGR}$ of exhaust gases to be internally recirculated can be stored in the electronic control unit 14 in the form of a table as a function of the engine operating point, defined by engine speed and load, or else be computed using other more sophisticated algorithms such as the one described in the aforementioned EP 2,093,403. Electronic control unit 14 is then programmed to compute, based on the so computed amount $m_{iEGR}$ of exhaust gases to be internally recirculated and on Equation (1), a command to be imparted to the variable valve actuation system 9 so as to internally recirculate the computed exhaust gas amount $m_{iEGR}$. In particular, when internal exhaust gas recirculation is obtained via actuation of an intake valve 3 during the exhaust phase of the cylinder 2 with which it is associated, the command is constituted by the engine crankshaft angle φ when the intake valve 3 that is to be driven to internally recirculate the exhaust gas amount has to close during the exhaust step. When, instead, the internal exhaust gas recirculation is obtained via actuation of an exhaust valve 6 during the intake phase of the cylinder 2 with which it is associated, the command is constituted by the engine angle φ when the exhaust valve 6 that is to be driven to internally recirculate the exhaust gas amount has to close during the intake phase.

Once the command has been imparted to the variable valve actuation system 9, electronic control unit 14 is programmed to:

- compute the amount $m_{iEGR}$ of internally recirculated exhaust gases based on the same Equation (1) used previously to compute, instead, the command for the variable valve actuation system 9;
- consequently act on the command for the variable valve actuation system 9 so as to eliminate any possible differences between the amount $m_{iEGR}$ of internally recirculated exhaust gases computed based on Equation (1) and the amount $m_{iEGR}$ of exhaust gases to be internally recirculated based on which the command for the variable valve actuation system 9 had been computed; and/or
- possibly update the amount $m_{iEGR}$ of exhaust gases to be internally recirculated based on which the command for the variable valve actuation system 9 had been computed; in particular, with reference to the examples indicated above, when the amount $m_{iEGR}$ of exhaust gases to be internally recirculated is stored in the form of a table, electronic control unit 14 updates the amount $m_{iEGR}$ of exhaust gases to be internally recirculated corresponding to the same engine operating point as that in which the amount $m_{iEGR}$ of internally recirculated exhaust gases was computed based on Equation (1); when, instead, the amount $m_{iEGR}$ of exhaust gases to be internally recirculated is computed using other more sophisticated algorithms, such as the one described in the aforementioned EP 2,093,403, electronic control unit 14 supplies to the algorithms the amount $m_{iEGR}$ of internally recirculated exhaust gases computed based on Equation (1).

Finally, electronic control unit 14 is programmed to closed-loop control the external exhaust gas recirculation so as to achieve given targets in terms of total amount of exhaust gases globally recirculated. To do this, electronic control unit 14 is programmed to firstly compute, in a way known per se and hence not described in detail, the total amount of exhaust gases to be globally recirculated based on the engine intake air flow rate measured through the air flowmeter, and then, as difference with respect to the computed amount $m_{iEGR}$ of internally recirculated exhaust gases, the amount of exhaust gases to be recirculated externally. Electronic control unit 14 is further programmed to closed-loop control the amount of exhaust gases externally recirculated by appropriately acting on the EGR valve of an external exhaust gas recirculation system, depicted schematically in the attached figure and designated respectively by numbers 15 and 16, so that the total amount of recirculated exhaust gases is equal to the computed one.

Finally, it is clear that modifications and variations may be made to what has been described and illustrated above, without thereby departing from the scope of protection defined by the appended claims. For example, the in-

cylinder pressure $P_{CYL}$, instead of being measured directly via a sensor associated with the cylinder, could be determined indirectly by the electronic control unit 14 based on a mathematical model, such as the one described in EP 1,477,651, wherein the mathematical model is based upon engine kinematic quantities such as the engine speed and crankshaft angle and upon the fuel injection law.

**Claims**

1. An automotive electronic control unit (14) for an internal combustion engine (1) comprising at least one cylinder (2) provided with at least one intake valve (3) and at least one exhaust valve (6), and a variable intake and/or exhaust valve actuation system (9); the electronic control unit (14) being configured to control the variable valve actuation system (9) so as to obtain an internal exhaust gas recirculation through the intake and exhaust valves (3, 6); the electronic control unit (14) being **characterized in that** it is configured to control the internal exhaust gas recirculation based on a mathematical model that models the fluid-dynamic behaviour of an intake or exhaust valve (3, 6) as if it was a nozzle (11).

2. The automotive electronic control unit (14) of Claim 1, configured to store and implement a mathematical model of a nozzle (11) that defines an amount ($m_{iEGR}$) of exhaust gases that flow through the nozzle (11) as a function of exhaust gas pressures ( $P_{UP}$, $P_{DOWN}$) upstream from and downstream of the nozzle (11), and of an iso-entropic section ($A_{is}$) of the nozzle (11) as a function of a lift ($h(\varphi)$) of the modelled intake or exhaust valve (3, 6).

3. The automotive electronic control unit (14) of Claim 2, further configured to store and implement the mathematical model of a nozzle (11) defined by the following equation:

$$m_{iEGR} = \int_{\varphi_1}^{\varphi_2} A_{is}(\varphi) \cdot \frac{p_{UP}(\varphi)}{\sqrt{RT_{Cyl}}} \cdot \sqrt{\frac{2k}{k-1}\left[\left(\frac{p_{DOWN}(\varphi)}{p_{UP}(\varphi)}\right)^{\frac{2}{k}} - \left(\frac{p_{DOWN}(\varphi)}{p_{UP}(\varphi)}\right)^{\frac{k+1}{k}}\right]} d\varphi$$

where:

- $\varphi$ is the engine crankshaft angle;
- $\varphi_1$ and $\varphi_2$ are the engine crankshaft angles in which the modelled intake or exhaust valve (3, 6) is kept open;
- $m_{iEGR}$ is the amount of exhaust gases that flows through the nozzle (11) during an actuation of the modelled intake or exhaust valve (3, 6);
- $A_{IS}(\varphi)$ is the iso-entropic section of the nozzle (11), which is a function of the engine crankshaft angle $\varphi$ ;
- $P_{UP}(\varphi)$ and $P_{DOWN}(\varphi)$ are the exhaust gas pressures upstream from and, respectively, downstream of the nozzle (11) in the exhaust gas flow direction, which are both functions of the engine crankshaft angle $\varphi$;
- $T_{cyl}$ is the temperature of the gaseous mixture within the engine cylinders (2);
- $k$ is the polytropic exponent; and
- $R$ is the universal gas constant.

4. The automotive electronic control unit (14) of Claim 2 or Claim 3, further configured to compute, when internal exhaust gas recirculation occurs through an intake valve (3), the iso-entropic section ($A_{is}$) of the nozzle (11) that models the intake valve (3) based on the in-cylinder pressure ($P_{CYL}$) in the cylinder with which the modelled intake valve (3) is associated, so as to take into account the opening delay of the modelled intake valve (3) caused by the in-cylinder pressure ($P_{CYL}$).

5. The automotive electronic control unit (14) of any one of Claims 2 to 4, further configured to compute the iso-entropic section ($A_{IS}$) of the nozzle (11) based on the lift of the modelled intake or exhaust valve (3, 6) according to the following equation:

$$A_{IS}(\varphi) = A_R \cdot C_E\big(h(\varphi)\big)$$

where:

- $\varphi$ is the engine crankshaft angle;
- $A_R$ is the area of a reference section of the nozzle (11);
- $h(\varphi)$ is the lift of the modelled intake or exhaust valve (3, 6) as a function of the engine crankshaft angle $\varphi$ ; and
- $C_E(h(\varphi))$ is the outflow coefficient of the modelled intake or exhaust valve (3, 6), which coefficient is a function of the lift $h(\varphi)$ coefficient of the modelled intake or exhaust valve (3, 6).

6. The automotive electronic control unit (16) of any one of Claims 2 to 5, further configured to compute the plot of the lift of the modelled intake or exhaust valve (3, 6) as a function of the engine crankshaft angle $(\varphi)$.

7. The automotive electronic control unit (14) of any one of the preceding claims, further configured to:

- compute an amount ($m_{iEGR}$) of exhaust gases to be internally recirculated based on a pre-set criterion; and
- compute, based on the computed amount ($m_{iEGR}$) of exhaust gases to be internally recirculated and on the mathematical model, a command for the variable valve actuation system (9) so as to recirculate internally the computed exhaust gas amount ($m_{iEGR}$).

8. The automotive electronic control unit (14) of Claim 7, further configured to store the amount ($m_{iEGR}$) of exhaust gases to be internally recirculated as a function of the engine operating point, defined by engine speed and load.

9. The automotive electronic control unit (14) of any one of the preceding claims, further configured to control the external exhaust gas recirculation based on the amount ($m_{iEGR}$) of internally recirculated exhaust gases and on a total amount of exhaust gases to be globally recirculated computed based on an engine intake air flow rate.

10. A software product loadable in an automotive electronic control unit (14) and designed to cause, when run, the electronic control unit (14) to become configured as claimed in any one of the preceding claims.

11. An internal combustion engine (1) comprising at least one cylinder (2) provided with at least one intake valve (3) and at least one exhaust valve (6); a variable intake and/or exhaust valve actuation system (9); an external exhaust gas recirculation system (16); and an electronic control unit (14) configured as claimed in any one of the preceding claims.

12. A motor vehicle comprising an internal combustion engine (1) with at least one cylinder (2) provided with at least one intake valve (3) and at least one exhaust valve (6); a variable intake and/or exhaust valve actuation system (9); an external exhaust gas recirculation system (16); and an electronic control unit (14) configured as claimed in any one of Claims 1 to 10.

**EUROPEAN SEARCH REPORT**

Application Number

EP 10 42 5171

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2008 032935 A1 (VOLKSWAGEN AG [DE]) 14 January 2010 (2010-01-14) * abstract * * paragraph [0004] - paragraph [0007] * * paragraph [0013] * * paragraph [0024] - paragraph [0039] * * paragraph [0051] * * paragraph [0070] - paragraph [0075] * * figures 1,2 * | 1-12 | INV. F02D41/00 F02D13/02 |
| A | Urlaub, Alfred: "Verbrennungsmotoren: Grundlagen, Verfahrtenstheorie, Konstruktion" 1994, Springer Verlag , Berlin Heidelberg , XP002604144 ISBN: 3 540 58194 4 * page 171 - page 181 * | 1-12 | |
| E | DE 10 2009 007808 A1 (IAV GMBH [DE]) 5 August 2010 (2010-08-05) * paragraph [0012] - paragraph [0015] * * figures 1,3,4 * | 1-12 | TECHNICAL FIELDS SEARCHED (IPC) F02D |
| A | DE 199 08 401 A1 (BOSCH GMBH ROBERT [DE]) 31 August 2000 (2000-08-31) * column 1, line 5 - column 2, line 63 * * figures 2,3 * | 1,10 | |

The present search report has been drawn up for all claims

| Place of search | Date of completion of the search | Examiner |
|---|---|---|
| Munich | 8 October 2010 | Wettemann, Mark |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 10 42 5171

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2010

| Patent document cited in search report | Publication date | Patent family member(s) | Publication date |
|---|---|---|---|
| DE 102008032935 A1 | 14-01-2010 | NONE | |
| DE 102009007808 A1 | 05-08-2010 | NONE | |
| DE 19908401 A1 | 31-08-2000 | FR 2790282 A1 | 01-09-2000 |
| | | IT MI20000254 A1 | 16-08-2001 |
| | | JP 4431242 B2 | 10-03-2010 |
| | | JP 2000257475 A | 19-09-2000 |
| | | US 6273077 B1 | 14-08-2001 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1589213 A
- EP 1273770 A
- EP 2093403 A
- EP 1477651 A